# EUROPEAN PATENT SPECIFICATION

(11) **EP 0 858 636 B1**
(45) Date of publication and mention of the grant of the patent: **10.05.2000**
(21) Application number: 96935581.7
(22) Date of filing: 28.10.1996
(51) Int. Cl.: G06K 7/10, A47F 9/04

(54) **SCANNING DEVICE FOR INDUSTRIAL APPLICATIONS**
ABTASTVORRICHTUNG FÜR INDUSTRIELLE ANWENDUNGEN
BALAYEUR POUR APPLICATIONS INDUSTRIELLES

(30) Priority: 26.10.1995 NL 1001510
(43) Date of publication of application: 19.08.1998
(73) Proprietor: Scantech B.V., 3812 RJ Amersfoort (NL)
(72) Inventor: SCHONENBERG, Cornelis, Reinier, Johannes, NL-2135 ML Hoofddorp (NL); NUNNINK, Laurentius, Wilhelmus, NL-3823 SG Amersfoort (NL)
(74) Representative: Land, Addick Adrianus Gosling
(86) International application number: NL9600423
(87) International publication number: WO9715216

(56) References cited:
- WO-A-86/05270
- WO-A-88/09975
- FR-A- 2 401 438
- US-A- 4 881 839
- US-A- 4 971 177

## Description

For industrial applications, wherein for instance objects provided with bar codes which are passing on a conveyer belt must be recognized, little space is usually available for arrangement of such a scanning device. In practice recourse is made to a scanning device wherein the decoding part for receiving the laser radiation reflected by the bar code is situated outside the housing of the device transmitting the laser scan lines. This makes a separate housing for the decoding part necessary, which is laborious and expensive.

From the international application WO-A-8809975 a device is known for scanning one or more bar codes on an object, which comprises a housing provided with a number of walls and a window for passage of one or more scanning radiation beams and of radiation returned from a bar code, a radiation source for emitting radiation beams and drive means therefor, sensor means for sensing the radiation returned from the bar code, a polygonal rotatable mirror for generating scan lines from the radiation emitted by the radiation source and drive means therefor, a fixed mirror close to the outer wall of the housing and opposite the window therein, for reflecting radiation beams from the polygonal rotatable mirror towards the window, and further electronic, optical and mechanical components.

In this known bar code scanner the different components, e.g. the radiation source, the sensor means etc., are placed on different walls of the housing. Variations or displacements of a wall of the housing will influence the corresponding incoming or outgoing laser beams, which in turn requires adjustment of the optical components.

The present invention however provides a device for scanning one or more bar codes on a object according to the preamble of claim 1, and is characterized by two plate-like components on which are arranged radiation source, the sensor means, the polygonal rotatable mirror, the fixed mirror and the further electronic, optical and mechanical components, which plate-like components are placeable in the housing in a closely fitting manner. Hence, the elements of the scanner can be fitted to the plate-like components and pre-aligned before they are placed in the housing. This arrangement avoids said adjustment requirements since variations in the arrangement thereof influences both the outgoing and returning laser beams. An additional improvement of the device according to the present invention is that, while all other optical components are fixedly positioned relative to each other in contrast to the known bar code scanner, after assembly of the internal unit, only the adjustable mirror has to be adjusted for correct operation of the scanning device, which facilitates the assembly and the costs thereof. Also the plate-like components are closely fitted in the housing to provide for a maximum optical path length for the scan lines.

According to a preferred embodiment of the invention a device is provided wherein laser light arriving from the polygonal rotatable mirror reflects on the fixed mirror to provide at least four parallel scan lines. Because of the more or less controlled conditions in which articles on a conveyer belt pass by the bar code scanner, that is used in industrial applications, and therefore the more or less constant angle between the bar codes (labels) on the articles and the scanner, only parallel scan lines in substantially one direction are written, for example only scan lines parallel to the direction of the transportation in case the bars of the bar code extend substantially perpendicular to this direction. Therefore it is possible to write scan lines with one fixed mirror only and to provide a window in the house directly above or opposite to said fixed mirror.

Due to the restricted amount of space available in an industrial environment the articles are moved closely to the scanner window. Therefore the scan line length provided by the laser should be large on or close to the scanner window to be able to read the entire bare code. Therefore, according to another preferred embodiment of the invention, a device is provided wherein at least the polygonal rotatable mirror, the fixed mirror, the window in the housing are arranged close to the outer walls of the housing such that a line length of about 60 mm is obtained at the location of the window. The fixed mirror is arranged close to the outer wall of the housing and opposite the window in this housing, and also the polygonal rotatable mirror is positioned close to the back wall and side of the housing as far away as possible from the fixed mirror. Because this components are arranged close to the outer walls of the housing, the optical path of the laser scan lines is as large as possible, which provides a sufficient length of the scan lines, with relatively compact dimensions of the housing.

According to a preferred embodiment of the invention the surfaces of the polygonal rotatable mirror have angles of substantially 45° relative to the central axis of the rotor, thereby also enlarging the optical path of the laser scan lines.

According to another preferred embodiment an additional sensor sensitive to laser radiation is arranged to detect an end of a scan line. More position information hereby becomes available for decoding bar codes and more accurate recognition can take place, for instance if two codes are located in one scan line or a code extends over two scan lines.

According to another preferred embodiment the sequence of inclining mirror surfaces of the polygonal rotatable mirror is determined such that the imbalance of the polygonal mirror is reduced. The angles of the mirror surfaces have successive values such that the imbalance are kept as small as possible during driving at high speed, while it is ensured that the mutual distance between successive scan lines does not become large such that at a determined speed of forward movement of the objects with bar code, a bar code can pass unscanned between mutually adjacent visible lines.

In the embodiment to be further described hereinbelow, a line length of 60 mm is obtained at the location of the window, while 1200 lines per second are generated by the scanning device, which is made possible by the high processing speed of the electronics and a high rotation speed of the polygonal mirror.

In a preferred embodiment the device according to the present invention has dimensions (l x w x h) in the order of magnitude of 12 cm x 9 cm x 4.5 cm. Little space is hereby taken up by the device according to the present invention which, as stated above, is of importance in most industrial embodiments.

Since the line length preferably amounts to about 60 mm, the device according to the present invention can be mounted for instance close to a conveyer belt, which results in space-saving. It will be apparent that the focussing area of the scan lines can be adjusted as desired, depending on the application, whereby at a somewhat greater distance from a conveyer belt, for instance 10 mm, a greater line length, for instance 70 mm, is available for scanning an object passing on the conveyer belt.

Since preferably about 1200 lines per second are written, a conveyer belt on which objects with a bar code are placed can be driven at relatively great speed. There is in any case, due to the great number of lines, an increased chance of a bar code being read properly. In this industrial environment there is often only one possibility available for correct recognition of the bar code on a passing object. Because the lines are written at great speed, it becomes possible to apply a so-called grid whereby, in addition to the above mentioned advantages, good recognition of a bar code can still be achieved when it is positioned less precisely in relation to the device according to the present invention.

Spring-mounted feet preferably form part of the fitting means, whereby the internal unit is little subject to vibrations possibly occurring in an industrial environment.

A thermally conductive and electrically insulating mat is preferably arranged between the cover of the housing and the part of the internal unit dissipating much heat in order to draw off the heat to the (metal) housing.

Further advantages, features and details of the present invention will be elucidated on the basis of the following description of a preferred embodiment thereof with reference to the annexed drawings, in which:
Fig. 1 shows an exploded perspective view of a device according to the present invention which can be placed in a housing in the assembled state;
fig. 2 shows a view in perspective of the assembled part of fig. 1 for placing in a housing which has been disassembled; and
fig. 3 shows a schematic top view in cross section of the device of fig. 1 and 2 with several laser beams indicated therein in order to elucidate the operation thereof.

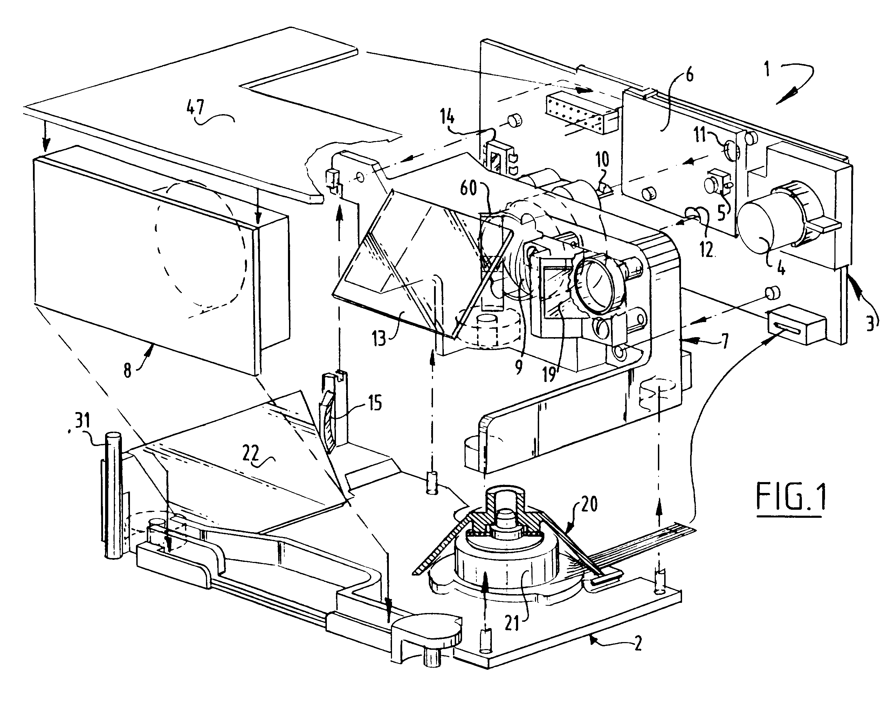

Internal unit 1 (fig. 1) for an industrial scanning device comprises a number of boards 3, 4 and 47 with printed circuitry (not shown) in addition to a plastic plate 2 on which the optical and electronic components for a scanning device according to the present invention are arranged. Arranged on board 3 is a laser light transmitting unit 4, for instance a laser diode, as well as a sensor or detector 5 for receiving the radiation induced or scattered by a bar code. Electronics (not shown) connected to the detector 5 are situated behind a metal screening plate 6 of board 3. Because the laser source 4 and the detector 5 are arranged on the same board, few problems occur in respect of adjustments of the various optical components, since possible slight variations in the arrangement thereof influence both the outgoing and the returning laser beam.

Fixed by means of snap connections to the board 3 is component 7 which is manufactured from injection-moulded plastic and on which a lens 9 for the detector is also arranged. Lens 9 is preferably of injection-moulded plastic and is provided with two leg parts, whereof leg part 10 is visible in figure 1, which leg parts are preferably formed integrally with the lens. The leg parts fit into openings or recesses 11, 12 of the screening plate 6 and can be snapped fixedly therein for easy and correct positioning of the lens and to facilitate the assembly. Also arranged on the plastic component 7 is a flat mirror 13 which casts the light received from a bar code via lens 9 onto the detector 5.

The components from injection-moulded plastic reduce the weight and can be manufactured in large numbers at little expense, while the snap connections reduce the labour involved in assembly.

Also arranged on board 3 is a second detector circuit 14 which receives light reflected from a preferably cylindrical mirror 15, the function of which will be described below.

The plastic component 7 is also fixed to plastic chassis part 2 onto which is arranged a rotatably drivable polygonal mirror 20, the mirror surfaces of which extend as far as the plate-like part 2 itself and beneath which an electric drive motor 21 of small dimensions is placed. Also arranged on component 2 is a second flat mirror 22 for allowing the laser light from the laser source 4 to pass through a window via mirror unit 19 and further mirror parts 60 and 13 and polygonal mirror 20 to an object with bar code. Further fixed to component 2 is a part 8 on which is arranged the electric power supply source for power supply to the internal unit.

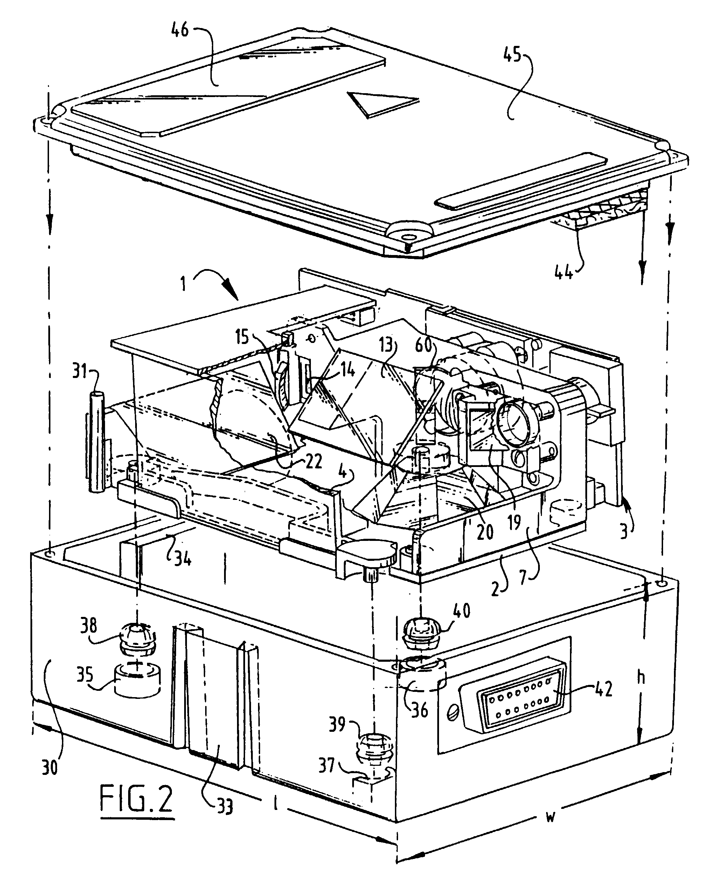

Because of the limited space usually available in industrial environments, the scanner according to the present invention has in the shown preferred embodiment (fig. 2) a length 1 of about 12 cm, a width w of about 9 cm and a height h of about 4.5 cm. Since with these compact dimensions the heat dissipation of the scanning device could represent a problem, components with the most dissipation, such as the laser source, the power supply source and the integrated circuits of the control are placed partly for this reason as far as possible to the outside of the boards, and the electric power supply source is situated as remotely as possible from and opposite the laser source, since for safety purposes the latter is automatically switched off at a determined temperature of for instance 50°C.

It is further endeavoured in the scanning device according to the present invention to restrict to a minimum the amount of wiring between the various boards close to the metal walls.

In the shown and described preferred embodiment the only wiring is formed by a flat cable leading to the stator part of the electric motor.

After the internal unit shown in fig. 1 is assembled it can be placed as a whole in a lower housing part 30 (fig. 2), for which purpose the internal unit is provided with a rod-like protrusion 31 on which the internal unit can be gripped. The lower housing part is preferably provided on two standing side walls with dovetail fastening parts 33 respectively 34 for rapid and simple mounting in this environment, such as sliding and clamping onto a frame part of a conveyor belt. The bottom of the lower housing part 30 is provided with fitting parts 35, 36 and 37, of which the fitting part 37 is open on one side, while corresponding rubber foot parts 38, 39 and 40 are arranged on the internal unit for absorbing vibrations which occur in the industrial environment. The rubber foot parts 38 and 39 are arranged on the plate 2, while foot part 40 is arranged on the component 7 placed thereon, whereby this component is likewise well supported in spring-mounted manner. Because the fitting part 37 is open on one side it is easy to place the internal unit in the housing part 30 in rapid manner. Further arranged in one of the standing walls of housing part 30 is a connector 42 for electric power supply and data communication with the internal unit.

After the internal unit 1 has been placed in the lower part 30 of the housing a mat-like element 44 is placed thereon, which is preferably of electrically insulating and heat conducting silicone material, which comes into contact with a cover 45 which is placed on the lower part 30 of the housing. The cover 45 is provided with a laser light-transmitting window 46 of scratch-resistant material which is glued against the cover on the outside thereof.

A board 47 provides the electrical connection between the part 8 with the power supply and the board 3 on which (most) electronic components are situated.

A peripheral cord seal is preferably situated between the cover and the lower part of the housing in order to make the housing leak water-tight.

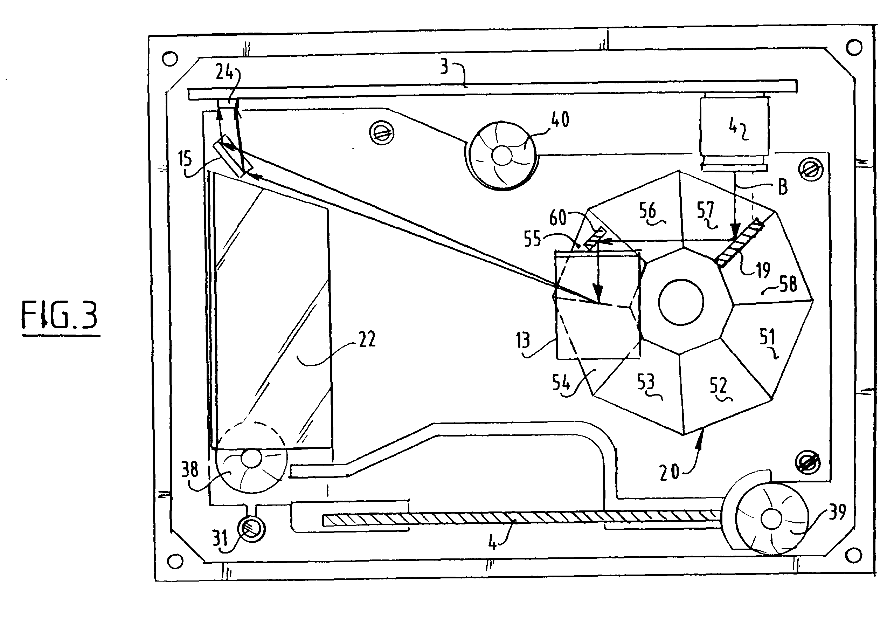

The mirror surfaces 51, 52, 53, 54, 55, 56, 57 and 58 (fig. 3) of polygon 20 have in each case a slightly different position relative to the vertical and in the present embodiment have successive angles of 46.60°; 46.14°; 45.68°; 44.77°; 44.32°; 45.23°; 43.43°; and 43.87° relative to the central axis of the rotor of the motor. Due to these angles differing slightly in each case, eight parallel scan lines with a length of 6 cm are generated through the window in this embodiment to scan bar codes on objects present in front of that window. Due to the above-mentioned sequence of the angles, mutually adjacent scan lines are not of course written successively. The polygon is preferably manufactured from injection moulded plastic with vapour-deposited mirror material, whereby the weight can become extremely low and amount for instance to 2.7 gram. The angles of the mirror surfaces have the above-mentioned successive values in order to keep the imbalance as small as possible during driving at high speed, for instance 9000 rpm, and to limit it for instance to a value of about 5 mgmm, while it is ensured that the mutual distance between successive scan lines does not become large such that at a determined speed of forward movement of the objects with bar code, a bar code can pass unscanned between mutually adjacent visible lines.

All options for the sequence of the above-mentioned angles of the polygon were calculated using a computer. While the finally chosen sequence does not have the very smallest imbalance of the polygon, it does ensure that the distance between two successively written parallel scan lines comprises no more than five times the distance between two such successive lines, thus preventing a bar code "slipping through".

It has been found in practice that assembly of a polygon on the rotor of the motor can take place rapidly, sufficiently accurately and securely with double-sided adhesive tape.

In fig. 3 can also be seen that a beam B coming from laser source 4 falls onto the polygon via adjustable mirror 19, a fixedly disposed further mirror 60 and mirror 13, and falls onto the concave mirror 15 close to the transition between two mirror surfaces, in the figure between mirror surface 54 and 55, which mirror 15 is situated adjacently of mirror 22. Using the concave mirror 15 and the detector 14 arranged on board 3 the end of a scan line is then recorded each time and passed on to the control electronics of the scanner. More position information hereby becomes available for decoding bar codes and more accurate recognition can take place, for instance if two codes are located in one scan line or a code extends over two scan lines.

After assembly of the internal unit of a scanning device according to the present invention only the adjustable mirror 19 has to be adjusted for correct operation of the scanning device, while all other components are fixedly positioned relative to each other.

The above described embodiment should not be interpreted as limitative; the rights requested are defined by the following claims, within the scope of which many modifications can be envisaged.

## Claims

1. Device for scanning one or more bar codes on an object, comprising a housing (30) provided with a window (46) for passage of one or more scanning radiation beams and of radiation returned from a bar code, a radiation source (4) for emitting radiation beams and drive means therefor, sensor means (5) for sensing the radiation returned from the bar code, a polygonal rotatable mirror (20) for generating scan lines from the radiation emitted by said radiation source (4) and drive means therefor, a fixed mirror (22) close to the outer wall of the housing (30) and opposite the window (46) therein, for reflecting radiation beams from the polygonal rotatable mirror (20) towards the window (46) and further electronic (14), optical (9,19,60) and mechanical (10,11) components;
**characterized by:**
- two or more plate-like components (2, 3, 8, 47) on which are arranged the radiation source (4), the sensor means (5), the polygonal rotatable mirror (20), the fixed mirror (22) and the further electronic, optical and mechanical components, which plate-like components are placeable in the housing (30) in a closely fitting manner.

2. Device as claimed in claim 1, wherein laser light arriving from the polygonal rotatable mirror (20) reflects on the fixed mirror (22) to provide at least four parallel scan lines.

3. Device as claimed claims 1 or 2, wherein at least the polygonal rotatable mirror (20), the fixed mirror (22) and the window (46) in the housing (30) are arranged close to the outer walls of the housing (30) such that a line length of about 60 mm is obtained at the location of the window (46).

4. Device as claimed in any of claims 1-3,
wherein the polygonal rotatable mirror (20) is positioned close to the back wall and side wall of the housing (30).

5. Device as claimed in any of claims 1-4,
wherein the surfaces of the polygonal rotatable mirror (20) have angles of substantially 45° relative to the central axis of the rotor.

6. Device as claimed in any of the claims 1-5,
wherein the housing (30) has outer dimensions length x width x height in the order of magnitude of 12 cm x 9 cm x 4.5 cm.

7. Device as claimed in any of claims 1-6, also comprising elastic feet for placing of the plate-like components in the housing (30).

8. Device as claimed in any of the preceding claims, wherein the housing is provided with one, two or more dovetail-like connecting parts (33,34) for mounting of the device in the industrial environment, for instance close to a conveyer belt.

9. Device as claimed in any of the preceding claims, wherein one of the plate-like components is provided with a rod-like protrusion (31) for removal thereof from the housing (3) and for placing therein, together with all optical, mechanical and electronic components, that is the internal unit of the device.

10. Device as claimed in any of the preceding claims, wherein the laser source and the sensor sensitive to laser light are arranged on the same plate-like component.

11. Device as claimed in any of the preceding claims, wherein a thermally conductive and electrically insulating slab or mat is incorporated between a cover of the housing and the electrical components.

12. Device as claimed in claim 11, wherein the slab or mat is made of silicone-like material.

13. Device as claimed in any of the preceding claims, wherein relatively many heat-dissipating elements, such as a power supply source, the radiation source (4) and a control circuit are arranged close to walls of the housing (30), therefore on the outer side of the plate-like components.

14. Device as claimed in any of the preceding claims, wherein the polygonal rotatable mirror (20) is of plastic onto which mirror surfaces are vapour-deposited.

15. Device as claimed in any of the preceding claims, wherein the polygonal rotatable mirror (20) is fixed to the rotor of the motor by means of double-sided adhesive tape.

16. Device as claimed in any of the preceding claims, wherein an additional sensor (14) sensitive to laser radiation is arranged to detect an end of a scan line.

17. Device as claimed in any of the preceding claims, wherein the sequence of the inclining mirror surfaces of the polygonal rotatable mirror (20) is determined such that the imbalance of the polygonal mirror is reduced.

18. Device as claimed in any of the preceding claims, wherein the rotation speed of the polygonal rotatable mirror (20) has a value such that about 1200 scan lines per second are produced.

19. Method for assembly of a device according to any of the preceding claims, wherein plate-like components with various optical and electronic components are fixed together to form one unit and wherein this unit is subsequently arranged in a fitting manner in the housing (30).

## Patentansprüche

1. Vorrichtung zum Abtasten eines oder mehrerer Strichcodes auf einem Gegenstand, mit einem Gehäuse (30) mit einem Fenster (46) für den Durchtritt eines oder mehrerer Abtaststrahlungsbündel und von einem Strichcode zurückgeworfener Strahlung, einer Strahlungsquelle (4) zum Aussenden von Strahlungsbündeln und Treibermitteln für dieselbe, eine Sensoreinrichtung (5) zum Erfassen der vom Strichcode zurückgeworfenen Strahlung, einem drehbaren Polygonalspiegel (20) zum Erzeugen von Abtastlinien aus der von der Strahlungsquelle (4) emittierten Strahlung und Antriebsmitteln dafür, einem feststehenden Spiegel (22) nahe der Außenwand des Gehäuses (30) und gegenüber dessen Fenster (46) zum Reflektieren von Strahlungsbündeln von dem drehbaren Polygonalspiegel (20) zu dem Fenster (46) und ferner mit elektronischen (14), optischen (9, 19, 60) und mechanischen (10, 11) Komponenten,
**gekennzeichnet** durch zwei oder mehr plattenartige Komponenten (2, 3, 8, 47), auf denen die Strahlungsquelle (4), die Sensoreinrichtung (5), der drehbare Polygonalspiegel (20), der feststehende Spiegel (22) und die weiteren elektronischen, optischen und mechanischen Komponenten angeordent sind, wobei die plattenartigen Komponenten in das Gehäuse (30) mit einer engen Passung einsetzbar sind.

2. Vorrichtung nach Anspruch 1,
bei der von dem drehbaren Polygonalspiegel (20) ankommendes Laserlicht an dem feststehenden Spiegel (22) reflektiert wird, um mindestens vier parallele Abtastlinien zu liefern.

3. Vorrichtung nach Anspruch 1 oder 2,
bei der mindestens der drehbare Polygonalspiegel (20), der feststehende Spiegel (22) und das Fenster (46) in dem Gehäuse (30) nahe den Außenwänden des Gehäuses (30) derart angeordnet sind, daß eine Zeilenlänge von etwa 60 mm am Ort des Fensters (46) erhalten wird.

4. Vorrichtung nach einem der Ansprüche 1 bis 3,
bei der der drehbare Polygonalspiegel (20) nahe der Rückwand und Seitenwand des Gehäuses (30) angeordnet ist.

5. Vorrichtung nach einem der Ansprüche 1 bis 4,
bei der die Oberflächen des drehbaren Polygonalspiegels (20) Winkel von im wesentlichen 45° zur Mittelachse des Rotors haben.

6. Vorrichtung nach einem der Ansprüche 1-5,
bei der das Gehäuse (30) Außenabmessungen Länge x Breite x Höhe in der Größenordnung von 12 cm x 9 cm x 4.5 cm hat.

7. Vorrichtung nach einem der Ansprüche 1-6,
das ferner elastische Füße für das Einsetzen der plattenförmigen Komponenten in das Gehäuse (30) aufweist.

8. Vorrichtung nach einem der vorangehenden Ansprüche, bei der das Gehäuse mit einem, zwei oder mehr schwalbenschwanzförmigen Verbindungsteilen (33, 34) versehen ist zum Montieren der Vorrichtung an dem industriellen Einsatzort, z.B. nahe an einem Förderband.

9. Vorrichtung nach einem der vorangehenden Ansprüche, bei dem eine der plattenförmigen Komponenten mit einer stabförmigen Verlängerung (31) versehen ist, um sie aus dem Gehäuse (3) herausnehmen und in das Gehäuse einsetzen zu können, zusammen mit allen optischen, mechanischen und elektronischen Komponenten, d.h. der internen Einheit der Vorrichtung.

10. Vorrichtung nach einem der vorangehenden Ansprüche, bei der die Laserquelle und der für Laserlicht empfindliche Sensor auf derselben plattenförmigen Komponente angeordnet sind.

11. Vorrichtung nach einem der vorangehenden Ansprüche, bei der eine thermisch leitfähige und elektrisch isolierende Platte oder Matte zwischen einer Abdeckung des Gehäuses und den elektrischen Komponenten eingebaut ist.

12. Vorrichtung nach Anspruch 11,
bei der die Platte oder Matte aus silikonartigem Material besteht.

13. Vorrichtung nach einem der vorangehenden Ansprüche, bei der relativ viele wärmeabgebende Elemente wie die Stromversorgung, die Strahlungsquelle (4) und eine Steuerschaltung nahe den Wänden des Gehäuses (30) und damit an der Außenseite der plattenförmigen Komponenten angeordnet sind.

14. Vorrichtung nach einem der vorangehenden Ansprüche, bei der der drehbare Polygonalspiegel (20) aus Kunststoff ist, auf dem Spiegeloberflächen aufgedampft sind.

15. Vorrichtung nach einem der vorangehenden Ansprüche, bei der der drehbare Polygonalspiegel (20) auf dem Rotor des Motors mittels doppelseitigen Klebebandes befestigt ist.

16. Vorrichtung nach einem der vorangehenden Ansprüche, bei der ein zustätzlicher, für Laserstrahlung empfindlicher Sensor (14) angeordnet ist, um das Ende einer Abtastzeile zu detektieren.

17. Vorrichtung nach einem der vorangehenden Ansprüche, bei der die Reihenfolge der geneigten Spiegelflächen des drehbaren Polygonalspiegels (22) so festgelegt ist, daß die Unwucht des Polygonalspiegels reduziert wird.

18. Vorrichtung nach einem der vorangehenden Ansprüche, bei der die Rotationsgeschwindigkeit des drehbaren Polygonalspiegels (20) einen solchen Wert hat, daß ca. 1200 Abtastzeilen pro Sekunde erzeugt werden.

19. Verfahren zur Montage einer Vorrichtung gemäß einem der vorangehenden Ansprüche, bei dem plattenförmige Komponenten mit verschiedenen optischen und elektronischen Komponenten zur Bildung einer Einheit miteinander verbunden werden und diese Einheit anschließend mit Passung in das Gehäuse (30) eingesetzt wird.

## Revendications

1. Dispositif servant à scanner un ou plusieurs codes à barres sur un objet, comprenant un boîtier (30) équipé d'une fenêtre (46) servant au passage d'un ou de plusieurs faisceaux de rayonnement balayeurs et du rayonnement renvoyé par un code à barres, une source de rayonnement (4) destinée à émettre des faisceaux de rayons et un dispositif d'entraînement pour celle-ci, un capteur (5) destiné à capter le rayonnement renvoyé par le code à barres, un miroir rotatif polygonal (20) servant à générer des lignes de balayage à partir du rayonnement émis par la source de rayonnement (4), et un dispositif d'entraînement pour celui-ci, un miroir fixe (22), proche de la paroi extérieure du boîtier (30) et en regard de la fenêtre (46) qui y est ménagée, destiné à réfléchir des faisceaux de rayons provenant du miroir rotatif polygonal (20) en direction de la fenêtre (46), et d'autres éléments électroniques (14), optiques (9, 19, 60) et mécaniques (10, 11) ;
**caractérisé par** deux éléments en forme de plaques (2, 3, 8, 47) ou plus, sur lesquels sont placés la source de rayonnement (4), le capteur (5), le miroir rotatif polygonal (20), le miroir fixe (22) et les autres éléments électroniques, optiques et mécaniques, ces éléments en forme de plaques étant susceptibles d'être placés dans le boîtier (30) en s'y adaptant de façon étroite.

2. Dispositif selon la revendication 1, dans lequel la lumière laser provenant du miroir rotatif polygonal (20) se réfléchit sur le miroir fixe (22) pour donner au moins quatre lignes de balayage parallèles.

3. Dispositif selon les revendications 1 ou 2, dans lequel au moins le miroir rotatif polygonal (20), le miroir fixe (22) et la fenêtre (46) ménagée dans le boîtier (30), sont montés à proximité des parois extérieures du boîtier (30), de telle sorte qu'une longueur de ligne d'approximativement 60 mm soit obtenue à l'emplacement de la fenêtre (46).

4. Dispositif selon l'une quelconque des revendications 1-3, dans lequel le miroir rotatif polygonal (20) est positionné à proximité de la paroi arrière et de la paroi latérale du boîtier (30).

5. Dispositif selon l'une quelconque des revendications 1-4, dans lequel les surfaces du miroir rotatif polygonal (20) présentent des angles de sensiblement 45° par rapport à l'axe central du rotor.

6. Dispositif selon l'une quelconque des revendications 1-5, dans lequel le boîtier (30) présente des dimensions extérieures - longueur x largeur x hauteur de l'ordre de 12 cm x 9 cm x 4,5 cm.

7. Dispositif selon l'une quelconque des revendications 1-6, comprenant également des pieds élastiques destinés à placer les éléments en forme de plaques dans le boîtier (30).

8. Dispositif selon l'une quelconque des revendications précédentes, dans lequel le boîtier est équipé d'une, de deux ou de plusieurs éléments de liaison du type en queue d'aronde (33, 34) permettant de monter le dispositif dans un environnement industriel, par exemple à proximité d'une bande transporteuse.

9. Dispositif selon l'une quelconque des revendications précédentes, dans lequel l'un des éléments en forme de plaques est pourvu d'une saillie (31) en forme de tige permettant de le retirer du boîtier (3) ou de l'y placer, avec tous les autres composants optiques, mécaniques et électroniques, c'est-à-dire l'unité interne du dispositif.

10. Dispositif selon l'une quelconque des revendications précédentes, dans lequel la source laser et le capteur sensible à la lumière laser sont montés sur le même élément en forme de plaque.

11. Dispositif selon l'une quelconque des revendications précédentes, dans lequel une plaque ou un matelas thermiquement conducteur et électriquement isolant est placé(e) entre un couvercle du boîtier et les composants électriques.

12. Dispositif selon la revendication 11, dans lequel la plaque ou le matelas est constitué en matériau semblable au silicone.

13. Dispositif selon l'une quelconque des revendications précédentes, dans lequel un nombre relativement important d'éléments dissipant la chaleur, tels que la source d'alimentation en énergie, la source de rayonnement (4) et un circuit de commande, sont disposés à proximité de parois du boîtier (30), par conséquent sur le côté extérieur des éléments en forme de plaques.

14. Dispositif selon l'une quelconque des revendications précédentes, dans lequel le miroir rotatif polygonal (20) est constitué en matière plastique et ses surfaces ont été métallisées sous vide.

15. Dispositif selon l'une quelconque des revendications précédentes, dans lequel le miroir rotatif polygonal (20) est fixé sur le rotor sur moteur au moyen d'un ruban adhésif double face.

16. Dispositif selon l'une quelconque des revendications précédentes, dans lequel un capteur supplémentaire (14), sensible au rayonnement laser, est prévu pour détecter une extrémité d'une ligne de balayage.

17. Dispositif selon l'une quelconque des revendications précédentes, dans lequel la séquence d'inclinaison des surfaces du miroir rotatif polygonal (20) est déterminée de telle sorte que le déséquilibre du miroir polygonal soit réduit.

18. Dispositif selon l'une quelconque des revendications précédentes, dans lequel la vitesse de rotation du miroir rotatif polygonal (20) a une valeur telle qu'approximativement 1200 lignes de balayage par seconde sont produites.

19. Procédé de montage d'un dispositif selon l'une quelconque des revendications précédentes, dans lequel des éléments en forme de plaques avec différents composants optiques et électroniques sont fixés ensemble pour former une unité, et dans lequel cette unité est ensuite disposée, en s'adaptant de façon étroite, dans le boîtier (30).
